# EUROPÄISCHE PATENTANMELDUNG

(11) **EP 1 002 700 A2**
(43) Veröffentlichungstag der Anmeldung: **24.05.2000**
(21) Anmeldenummer: 99120728.3
(22) Anmeldetag: 20.10.1999
(51) Int. Cl.: B60R 19/52, B60R 19/40

(54) **Anordnung eines Frontschutzbügels an einem Kraftwagenbug**

(30) Priorität: 17.11.1998 DE 19852959
(71) Anmelder: DaimlerChrysler AG, 70567 Stuttgart (DE)
(72) Erfinder: Eipper, Konrad, 72108 Rottenburg (DE); Scheffzük, Matthias, 72074 Tübingen (DE)

(57) **Zusammenfassung**

Die Erfindung bezieht sich auf eine Anordnung eines Frontschutzbügels (12) an einem Kraftwagenbug, der mittels biegesteifer Stangenprofile (13,18) an tragenden Bauteilen (38-41) der Kraftwagenkarosserie abgestützt ist, wobei sich die insgesamt zu einem Rahmen geschlossenen Stangenprofile des Frontschutzbügels, die weitgehend im Überdeckungsbereich mit dem eine vordere Stirnwand (15) und einen elastisch nachgiebigen Stoßfänger (23) umfassenden Kraftwagenbug liegen, zumindest über einen überwiegenden Teil der Breite und Höhe des Kraftwagenbugs erstrecken.
Die Stirnwand des Kraftwagenbugs weist eine an den Verlauf des Rahmens angepaßte Bugkontur auf, die zumindest einen in die Stirnwand eingelassenen Abschnitt (24) umfaßt, in dem wenigstens ein Stangenprofil des Rahmens zumindest mit einem Teilquerschnitt versenkt anzuordnen ist. Der Rahmen des Frontschutzbügels ist bei abgesenktem Stangenprofil gegenüber der Vorderseite des Stoßfängers nach hinten versetzt angeordnet.

## Beschreibung

Die Erfindung betrifft eine Anordnung eines Frontschutzbügels an einem Kraftwagenbug nach dem Oberbegriff des Patentanspruchs 1.

Eine solche Anordnung eines Frontschutzbügels ist aus der WO 96/20852 A1 bekannt. Dieser Frontschutzbügel weist biegesteife Stangenprofile auf, die fachwerkartig zu einem Rahmen geschlossen verstrebt und an tragenden Bauteilen der Kraftwagenkarosserie befestigbar sind. Der Frontschutzbügel liegt im Überdeckungsbereich des Kraftwagenbugs und erstreckt sich zumindest über einen überwiegenden Teil von dessen Breite und Höhe. Weiter ist der Frontschutzbügel - die vordere Fahrzeugaußenkontur bildend - mit Abstand vor einer vorderen Stirnwand des Kraftwagenbugs angeordnet. Dabei übergreift der Frontschutzbügel mit zwei Rahmenteilen einen vorderen, elastisch nachgiebigen Stoßfänger, so daß die Funktion des hinter den Rahmenteilen liegenden Stoßfängers beeinträchtigt wird.

Ein weiterer Nachteil der gattungsgemäßen Anordnung des Frontschutzbügels ist es, daß auch bei kleineren Parkremplern Schäden am eigenen oder an anderen beteiligten Fahrzeugen verursacht werden können, insbesondere wenn der Frontschutzbügel den Stoßfänger nach vorn überragt und die vordere Fahrzeugaußenkontur bildet. Außerdem kann bei Frontalunfällen mit Personenbeteiligung von einem mit größerem Abstand vor der Stirnfläche des Fahrzeugbug angeordneten Rahmen ein erhöhtes Verletzungsrisiko für die angefahrene Person ausgehen.

Zudem können solche Frontschutzbügel die aerodynamische Form eines Kraftwagens beeinträchtigen und dadurch einen höheren Kraftstoffverbrauch verursachen.

Aufgabe der Erfindung ist es, eine Anordnung eines Frontschutzbügels an einem Kraftwagenbug der im Oberbegriff des Patentanspruchs 1 angegebenen Art zu schaffen, durch welche die Eigenschaften bei Unfällen mit Personen- oder Fahrzeugbeteiligung sowie die aerodynamische Gestaltung des Kraftwagenbugs weiter verbessert werden können.

Diese Aufgabe wird erfindungsgemäß durch eine Anordnung eines Frontschutzbügels mit den Merkmalen des Patentanspruchs 1 gelöst.

Bei der Anordnung des Frontschutzbügels nach der Erfindung hat die Stirnwand des Kraftwagenbugs eine an den Rahmen angepaßte Bugkontur mit einem in sie eingelassenen Abschnitt, in dem zumindest ein Stangenprofil des Rahmens wenigstens mit einem Teilquerschnitt versenkt einliegen kann. Bei dieser abgesenkten Anordnung des Stangenprofils befindet sich der Rahmen gegenüber der Vorderseite des Stoßfängers nach hinten versetzt. Damit ist der Rahmen des Frontschutzbügels aus der bislang bekannten Stellung, also mit Abstand vor der Stirnwand des Kraftwagenbugs angeordnet, nun in eine Stellung nahe der an diesen angepaßten Stirnwand zurückversetzt positionierbar. Je nach Ausgestaltung und Form des Frontschutzbügels und des Kraftwagenbugs können entweder ein oder mehrere Stangenprofile des Rahmens oder auch der gesamte Rahmen in dem eingelassenen Abschnitt der Stirnwand versenkt angeordnet werden, wobei der Abschnitt bei der Aufnahme des kompletten Rahmens als Negativform für diesen ausgebildet sein kann. Da Stangenprofile unterschiedlichsten geschlossenen oder offenen Querschnitts, wie z.B. Rohrprofile, ovale oder elliptische Profile, C-, L- oder U-Profile verwendet werden können, sind die Sicken des in die Stirnwand eingelassenen Abschnitts entsprechend angepaßt. Dabei können die Stangenprofile sowohl mit einem Teilquerschnitt als auch vollständig in den Sicken des eingelassenen Abschnitts versenkt angeordnet sein.

Durch diese Anordnung des Frontschutzbügels an dem Kraftwagenbug wird die reversible Abfederungswirkung des Stoßfängers in üblicher Weise ohne Beaufschlagung des Frontschutzbügels aufrechterhalten, so daß sich beispielsweise die Bedienungsfreundlichkeit des Fahrzeuges beim Einparken in enge Parklücken erhöht oder bei einem Rempler oder leichteren Frontalaufprall ein Schaden am eigenen oder an anderen beteiligten Fahrzeugen vermieden werden kann. Dabei kann der Rahmen auch in Vertiefungen des Stoßfängers versenkt angeordnet werden, wobei der Frontschutzbügel sowohl nur oberhalb als auch ober- und unterhalb des Stoßfängers liegen kann.

Ragt der Rahmen dabei leicht über die Stirnwand des Kraftwagenbugs, so weist der Frontschutzbügel trotz der nach hinten versetzten Anordnung die bereits bekannten Vorteile auf, den Kraftwagenbug insbesondere bei Geländefahrten vor Schlageinwirkungen z.B. durch Äste zu schützen.

Durch die zurückgezogene Stellung des Rahmens wird ein Frontschutzbügel geschaffen, der ein deutlich vermindertes Verletzungsrisiko bei Frontalunfällen mit Personenbeteiligung aufweist. Dabei bietet sich insbesondere ein Frontschutzbügel an, dessen Rahmen etwa in einer Fläche mit der Stirnwand liegt.

Auch kann bei einem sich weit nach oben bis etwa auf Höhe der Motorhaube erstreckenden Rahmen ein Unterfahren von Hindernissen, insbesondere von Lastkraftwagen, besser vermieden werden. Insgesamt ergibt sich durch den über einen überwiegenden Teil der Höhe und Breite des Kraftwagenbugs verlaufenden Rahmen auch ein verbessertes Unfallverhalten des Kraftwagens. Bei einem Frontalaufprall mit geringer Breitenüberdeckung können die entstehenden Kräfte durch den Frontschutzbügel besser auf die gesamte Breite und Höhe der Knautschzone des Kraftwagen verteilt und dadurch die Kräfte deutlich besser absorbiert werden.

Schließlich ermöglicht die Anordnung des Frontschutzbügels nach der Erfindung einen aerodynamisch ausgestalteten Kraftwagenbug, der eine Reduzierung des Kraftstoffverbrauches ermöglicht. Zudem wird die unter Umständen etwas aggressive Formgebung bislang bekannter Frontschutzbügel abgemildert und eine zurückhaltende Form der Frontpartie geschaffen.

Vorteilhafte Ausführungsformen der Anordnung des Frontschutzbügels mit zweckmäßigen und nicht trivialen Weiterbildungen der Erfindung sind in den Unteransprüchen beschrieben.

So hat sich ein insgesamt oberhalb eines Stoßfängers angeordneter Rahmen als besonders vorteilhaft gezeigt, da der Frontschutzbügel auf einfache Weise in die Stirnfläche integrierbar ist und seine volle Schutzwirkung entfalten kann.

Ein über die annähernd gesamte Breite verlaufendes unteres Stangenprofil und ein mit diesem verbundenes, etwa U-bügelförmiges und bis etwa auf Höhe einer Bugoberkante verlaufendes oberes Stangenprofil ergeben insgesamt einen Rahmen, der die wesentlichen Schutzeigenschaften des Frontschutzbügel gewährleistet und auf relativ einfache Weise zu fertigen und in die Stirnwand des Bugs zu integrieren ist.

Ist der Kraftwagenbug seitlich und nach oben von dem Rahmen begrenzt, der auch als Umrahmung für die Scheinwerfer und den Kühlergrill ausgebildet ist, so ist insbesondere der die Scheinwerfer umfassende Eckbereich zwischen der Stirnfläche und den Seitenflächen gut vor Schlageinwirkungen geschützt.

Durch einen Grundrahmen, dessen Eckbereiche an zwei oberen und zwei unteren Längsträgern angeordnet sind, wird eine besonders gute Anbindung des Frontschutzbügels an die Knautschzone des Kraftwagens geschaffen. Der Rahmen ist damit besonders gut geeignet, Kräfte im Falle eine Frontalaufpralls zu verteilen und weiterzuleiten.

Durch die Anordnung von jeweils einer Crashbox zwischen den unteren Eckbereichen des Grundrahmens und den unteren Längsträgern kann die bei einem Unfall den Rahmen beaufschlagende Energie in vorteilhafter Weise abgebaut werden. Da erfahrungsgemäß die unteren Längsträger größere Kräfte absorbieren müssen, sind die Energieabsorptionselemente zumindest dort angeordnet. In einer besonders vorteilhaften Ausführung sind zwischen sämtlichen Eckbereichen und den zugeordneten Längsträgern diese Elemente vorgesehen.

In einer vorteilhaften Ausgestaltung der Erfindung ist der Frontschutzbügel aus seiner versenkten Stellung, die beispielsweise für Fahrten innerhalb einer Stadt oder bei Autobahnfahrten geeignet ist, bei erhöhtem Schutzbedarf in eine nach vorn verschobene Stellung ausfahrbar. Ein Frontschutzbügel mit den bereits beschrieben Vorteilen in eingefahrener Stellung weist damit bei einem solchen Schutzbedarf, wie z.B. bei Geländefahrten, eine noch bessere Schutzwirkung auf.

Schließlich hat es sich als besonders günstig gezeigt, den Frontschutzbügel unter Ansteuerung einer Näherungssensorik beispielsweise im Falle eines Frontalaufpralls in eine nach vorn verschobene Stellung ausfahrbar zu gestalten. Im Crashfall kann somit eine Verlängerung der Knautschzone und ein deutlich verbessertes Unfallverhalten des Kraftwagens erzielt werden. Anstelle der an sich bekannten Näherungssensorik kann natürlich auch eine geschwindigkeits- oder verzögerungsabhängige Sensorik eingesetzt werden.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in
- Fig. 1: eine perspektivische Vorderansicht eines Kraftwagens mit einem in versenkter Stellung an einem Kraftwagenbug angeordneten Frontschutzbügel nach einer ersten Ausführungsform der Erfindung;
- Fig. 2: eine perspektivische Vorderansicht des Kraftwagens mit dem in versenkter Stellung an dem Kraftwagenbug angeordneten Frontschutzbügel nach einer weiteren Ausführungsform der Erfindung;
- Fig. 3: eine schematische Schnittansicht der Anordnung des versenkten Frontschutzbügels entlang der Linie III-III in Fig.2;
- Fig. 4: eine schematische Schnittansicht der Anordnung des versenkten Frontschutzbügels entlang der Linie IV-IV in Fig.2;
- Fig. 5: eine perspektivische Vorderansicht des Kraftwagens mit dem in ausgefahrener Stellung an dem Kraftwagenbug angeordneten Frontschutzbügel gemäß Fig.2;
- Fig. 6: eine schematische Schnittansicht der Anordnung des ausgefahrenen Frontschutzbügels entlang der Linie VI-VI in Fig.5.

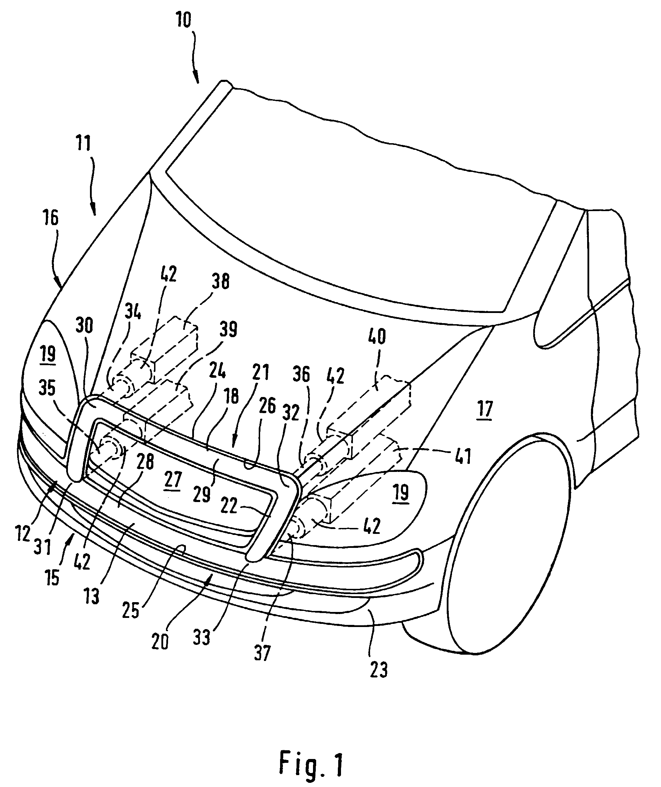

In Fig.1 ist eine perspektivische Vorderansicht eines Kraftwagens 10 dargestellt, an dessen Kraftwagenbug 11 ein Frontschutzbügel 12 angeordnet ist. Der Frontschutzbügel 12 weist ein etwa waagerecht und in Fahrzeugquerrichtung verlaufendes unteres Stangenprofil 13 auf, das sich über die gesamte Breite des Kraftwagens 10 bis in den jeweiligen Eckbereich zwischen einer vorderen Stirnwand 15 und dem vorderen Ende von Seitenwänden 16,17 erstreckt. Weiter umfaßt der Frontschutzbügel 12 ein mit dem unteren Stangenprofil 13 verbundenes, U-bügelförmiges oberes Stangenprofil 18, das sich ausgehend von dem unteren Stangenprofil 13 zwischen zwei seitlich in der Stirnwand 15 angeordneten Scheinwerfer 19 bis etwa auf Höhe einer in diesem Bereich durch eine Motorhaube gebildete Bugoberkante 21 erstreckt. Die in diesem Ausführungsbeispiel aus Edelstahl bestehenden beiden Stangenprofile 13,18 sind miteinander zu einem Rahmen 22, der im Überdeckungsbereich des Kraftwagenbugs 11 liegt, geschlossen verschweißt. Andere Verbindungen, wie z.B. mittels Schrauben oder dgl., die eine ausreichende Festigkeit gewährleisten, sind ebenso denkbar. Außerdem kann der Frontschutzbügel 12 je nach Fahrzeugtyp auch aus einem Kunststoff mit entsprechender Biegesteifigkeit, z.B. aus glasfaserverstärktem Kunststoff oder dgl. bestehen.

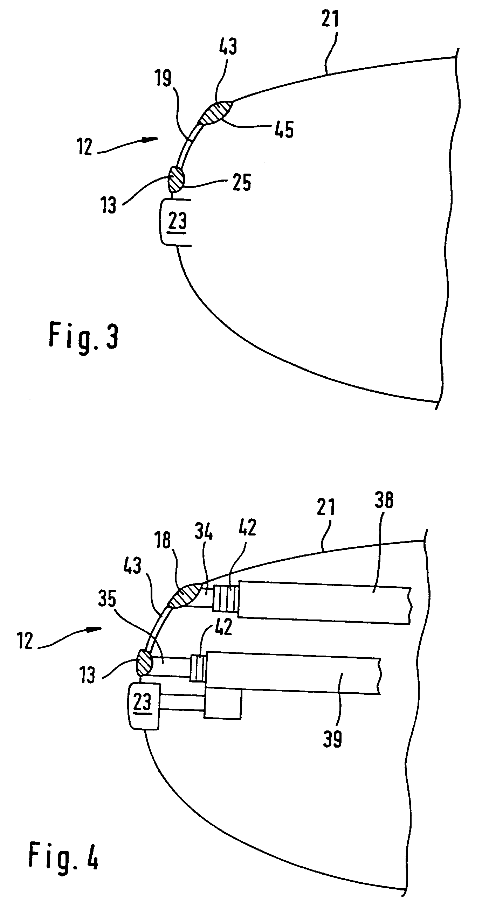

Der Frontschutzbügel 12 ist insgesamt oberhalb eines Stoßfängers 23 angeordnet, der sich vorzugsweise etwa parallel zu dem unteren Stangenprofil 13 erstreckt, wobei der Stoßfänger 23 - wie besonders in Fig.3 und 4 erkennbar - in Fahrzeuglängsrichtung von vorn betrachtet den Frontschutzbügel 12 mit seiner Vorderseite 20 überragt. Der Stoßfänger 23 besteht aus einem Kunststoffmaterial und ist in üblicher Weise über nicht dargestellte elastische Zwischenelemente mit einem ebenfalls nicht gezeigten vorderen Querträger verbunden, so daß der Stoßfänger zumindest bis zu einer Aufprallgeschwindigkeit von 4 km/h elastisch nachgiebige Eigenschaften aufweist. Die vordere Stirnwand 15 des Kraftwagenbugs 11 weist eine an den Verlauf des Rahmens 22 angepaßte Bugkontur auf, in die bei diesem Ausführungsbeispiel ein Abschnitt 24 eingelassen ist, in dem der Rahmen 22 des Frontschutzbügel 12 versenkt angeordnet ist. Mit anderen Worten ist der in die Stirnwand 15 eingeformte Abschnitt 24 als Negativform ausgebildet, in die der Rahmen 22 versenkt angeordnet ist. Dabei sind in die vordere Stirnwand 15 eine etwa waagerecht, in Fahrzeugguerrichtung verlaufende und an das untere Stangenprofil 13 angepaßte untere Sicke 25 oder dgl. Vertiefung und eine etwa U-bügelförmige und mit der unteren Sicke 25 verbundene obere Sicke 26 oder dgl. Vertiefung eingeformt, die bei diesem Ausführungsbeispiel den Abschnitt 24 bilden. Die untere Sicke 25 ist unmittelbar oberhalb des Stoßfängers 23 und unterhalb der Scheinwerfer 19 bzw. eines Kühlergrills 27 in die Stirnwand 15 eingebracht. Die obere Sicke 26 ist zwischen den Scheinwerfern 19 - den Kühlergrill 27 seitlich und nach oben begrenzend - ebenfalls in die Stirnwand 15 eingeformt. Auf die weitere Ausgestaltung des Rahmens 22 und dessen Anordnung innerhalb des Ausschnittes 24 wird insbesondere unter Bezugnahme der Fig. 3 und 4 noch näher eingegangen.

Das obere Stangenprofil 18 und ein mittlerer Stangenabschnitt 28 des unteren Rahmenprofils 13 bilden einen annähernd rechteckigen Grundrahmen 29, dessen Eckbereiche 30-33 mit Hilfe von biegesteifen, gestrichelt angedeuteten weiteren Stangenprofilen 34-37 an zwei oberen und zwei unteren, ebenfalls gestrichelten Längsträgern 38-41 der Kraftwagenkarosserie abgestützt sind. Die weiteren Stangenprofile 34-37 bestehen in dem hier gezeigten Ausführungsbeispiel aus Edelstahlrohren, die mit dem jeweiligen Eckbereich 30-33 verschweißt sind und sich etwa in Fahrzeuglängsrichtung erstrecken. Natürlich wäre es in diesem Zusammenhang auch denkbar, daß die weiteren Stangenprofile 34-37 ebenfalls aus einem Kunststoff bestehen und durch eine andere lösbare oder unlösbare Verbindung mit dem Grundrahmen 29 eine Einheit bilden. Gleichfalls wäre es auch denkbar, den Frontschutzbügel 12 mit dem Grundrahmen 29 ohne die Verwendung der weiteren Stangenprofile 34-37 direkt an den Längsträgern 38-41 abzustützen. In einfachster Ausführungsform kann der Frontschutzbügel 12 auch nur mit den beiden unteren Längsträgern 39,41 verbunden sein oder an anderen tragenden Bauteilen der Kraftwagenkarosserie abgestützt werden. Die weiteren Stangenprofile 34-37 umfassen jeweils ein zwischen den Eckbereichen 30-33 und den Längsträgern 38-41 angeordnetes, gestrichelt angedeutetes Energieabsorptionselement (Crashbox 42), das dem entsprechenden Längsträger 38-41 vorgelagert ist. Dabei wäre es auch denkbar, lediglich zwischen die beiden unteren Eckbereiche 32,33 und den unteren Längsträgern 40,41 jeweils eine Crashbox 42 anzuordnen.

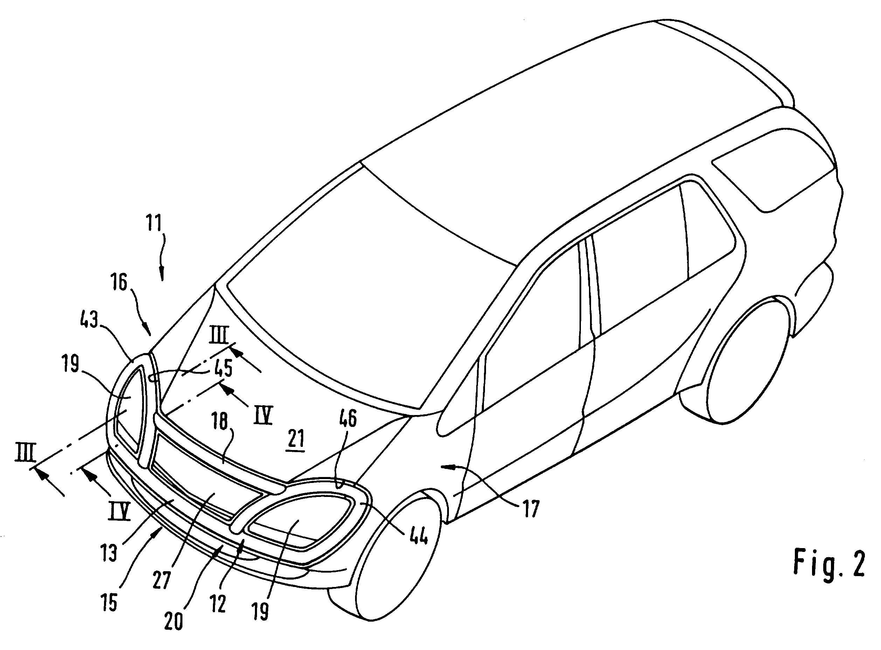

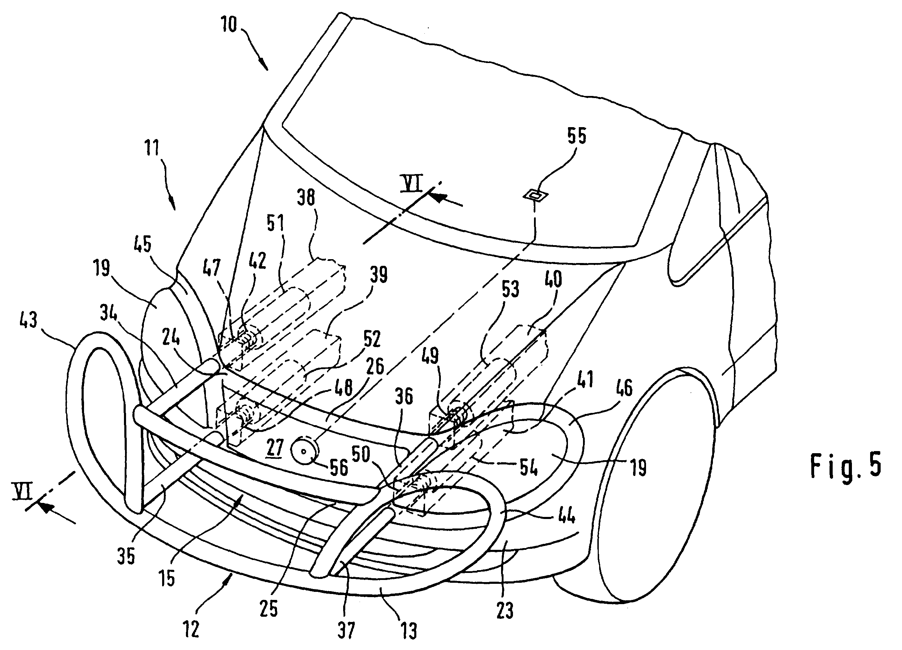

Fig.2 zeigt einen weiteren, an dem Kraftwagenbug 11 angeordneten Frontschutzbügel 12, der zusätzlich zu dem unteren, waagerechten und dem oberen, U-bügelförmigen Stangenprofil 13,18 seitliche Stangenprofile 43,44 umfaßt, die als Umrahmung für die Scheinwerfer 19 ausgebildet sind und den Kraftwagenbug 11 seitlich und nach oben begrenzen. Entsprechend endet die Motorhaube 21 hinter dem Frontschutzbügel 12. Zur versenkten Aufnahme der seitlichen Stangenprofile 43,44 innerhalb der Stirnwand 15 sind seitliche Sicken 45,46 vorgesehen, die entweder im Eckbereich zwischen der Stirnwand 15 und den Seitenwänden 16,17 bzw. zwischen der Stirnwand 15 und der oberen Bordwand 21 in die Stirnwand 15 eingeformt sind. Dabei wäre es denkbar, daß die Sicken 25,26,45,46 teilweise auch in die Scheiben der Scheinwerfer 20 oder in den Kühlergrill 27 eingeformt sind. Die Form der Sicken 25,26,45,45 ist insbesondere in Fig.5 gut erkennbar.

In Fig.3 ist eine schematische Schnittansicht des versenkten Frontschutzbügels 12 entlang der Linie III-III in Fig.2 dargestellt, wobei das seitliche Stangenprofil 43 mit einem Teilquerschnitt innerhalb der seitlichen Sicke 45 versenkt angeordnet ist. Die Stangenprofile 13,18,43,44 weisen hier jeweils einen etwa elliptischen Querschnitt auf, der einem etwa halbelliptischen Querschnitt der Sicken 25,26,45,46 angepaßt ist, wobei die Stangenprofile 13,18,43,44 etwas aus den Sicken 25,26,45,46 hervorragen. Selbstverständlich können die Stangenprofile 13,18,43,44 auch andere geschlossene oder offene Querschnitte z.B. in C-, U-, O- oder L-Form aufweisen, wobei die Profile zusätzlich auch mit einem elastischen Material überzogen sein können. Dabei kann der Rahmen 22 aus einem durchgehend gleich oder abschnittsweise unterschiedlichen Profil bestehen. Außerdem ist es erkennbar, daß das untere Stangenprofil 13 unmittelbar oberhalb des Stoßfängers 23 angeordnet ist und der gesamte Frontschutzbügel 12 in Fahrzeuglängsrichtung von vorn gesehen hinter dem Stoßfänger 23 liegt.

Ein schematischer Schnitt durch den versenkten Frontschutzbügels 12 entlang der Linie IV-IV in Fig.2 bzw. entlang der weiteren Stangenprofile 34,35 ist in Fig.4 dargestellt, bei dem die Anordnung der Energieabsorptionselemente am Ende der Stangenprofile 34,35 und vor den Längsträgern 38,39 erkennbar ist. Je nach Fahrzeugtyp ist es dabei z.B. aus Gründen der Platzeinsparung denkbar, auf eine obere Verbindung zwischen Frontschutzbügel 12 und oberem Längsträger 38 zu verzichten.

Fig.5 zeigt in perspektivischer Vorderansicht den Kraftwagen 10 mit dem Frontschutzbügel 12 gemäß Fig.2 in ausgefahrener Stellung. Dabei wird der in der Stirnwand 15 und im Bereich der Scheinwerfer 19 teilweise auch in deren Scheiben eingeformte und als Negativform mit dem Frontschutzbügel 12 korrespondierende Abschnitt 24 mit den Sicken 25,26,45 und 46 erkennbar. Um den Frontschutzbügel 12 verschiebbar an der Kraftwagenkarosserie anzuordnen, sind die weiteren Stangenprofile 34-37 durch gestrichelt dargestellte Führungen 47-50 wie z.B. weitere Rohr geführt, die innerhalb der gestrichelt angedeuteten Längsträger 38-41 angeordnet sind. Ebenfalls innerhalb der Längsträger 38-41 ist zum Ausfahren des Frontschutzbügels 12 jeweils ein gestrichelt gezeigter Pneumatikzylinder 51-54 festgelegt, wobei die Stangenprofile 34-37 die jeweilig Kolbenstange der Zylinder 51-54 bilden. Die Zylinder 51-54 werden dabei durch einen nicht dargestellten Gasvorratsspeicher gespeist. Anstelle mittels Pneumatikzylinder 51-54 wäre es natürlich auch denkbar, den Frontschutzbügel 12 mechanisch oder hydraulisch ausfahrbar zu gestalten. Die Stangenprofile 34-37 umfassen wiederum jeweils ein Energieabsorptionselement 42, das zur Aufnahme von Unfallenergie dient.

Der Frontschutzbügels 12 kann zum Verfahren aus seiner versenkten Stellung in die ausgefahrene Stellung entweder durch einen vorzugsweise innerhalb der Fahrgastzelle angeordneten Schalter 55 insbesondere durch den Fahrer angesteuert werden oder durch eine Näherungssensorik 56, die innerhalb des Kraftwagenbugs 11 angeordnet ist.

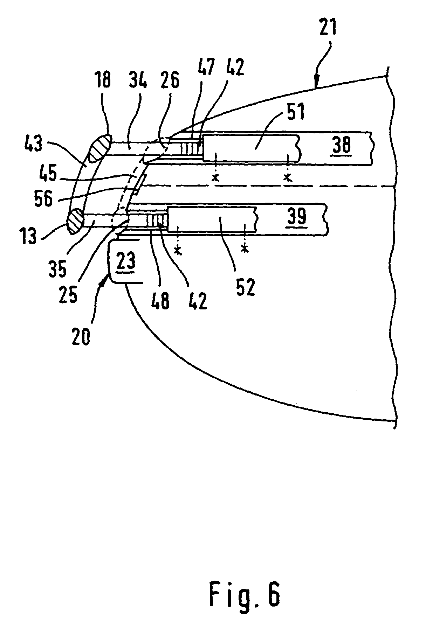

In Fig.6 ist schematisch ein Schnitt durch die Anordnung des ausgefahrenen Frontschutzbügels 12 entlang der Linie VI-VI in Fig.5 bzw. dargestellt. Der ausgefahrene Frontschutzbügel 12 ist dabei in seiner ausgefahrenen Stellung durch eine nicht dargestellte Feststelleinrichtung arretiert. Der Abstand des nach vorne ausgefahrenen Frontschutzbügels 12 ist dabei je nach Fahrzeugtyp und Anforderung variabel. Im Rahmen der Erfindung wäre es auch denkbar, den Stoßfänger 23 gemeinsam mit dem Frontschutzbügel 12 ausfahrbar zu gestalten. Gleichfalls ist es als mitumfaßt zu betrachten, daß das untere Stangenprofil 13 die Funktion des vorderen Querträgers übernimmt, wobei der Stoßfänger 23 dann auch an dem unteren Stangenprofil 13 angeordnet sein kann.

## Patentansprüche

1. Anordnung eines Frontschutzbügels an einem Kraftwagenbug, der mittels biegesteifer Stangenprofile an tragenden Bauteilen der Kraftwagenkarosserie abgestützt ist, wobei sich die insgesamt zu einem Rahmen geschlossenen Stangenprofile des Frontschutzbügels, die weitgehend im Überdeckungsbereich mit dem eine vordere Stirnwand und einen elastisch nachgiebigen Stoßfänger umfassenden Kraftwagenbug liegen, zumindest über einen überwiegenden Teil der Breite und Höhe des Kraftwagenbugs erstrecken,
**dadurch gekennzeichnet,**
daß die Stirnwand (15) des Kraftwagenbugs (11) eine an den Verlauf des Rahmens (22) angepaßte Bugkontur aufweist, die zumindest einen in die Stirnwand (15) eingelassenen Abschnitt (24) umfaßt, in dem wenigstens ein Stangenprofil (13,18, 43,44) des Rahmens (22) zumindest mit einem Teilquerschnitt versenkt anzuordnen ist und daß der Rahmen (22) des Frontschutzbügels (12) bei abgesenktem Stangenprofil (13,18,43,44) gegenüber der Vorderseite (20) des Stoßfängers (23) nach hinten versetzt angeordnet ist.

2. Anordnung nach Anspruch 1,
**dadurch gekennzeichnet,**
daß der Rahmen (22) des Frontschutzbügels (12) insgesamt oberhalb eines Stoßfängers (23) des Kraftwagens (10) angeordnet ist.

3. Anordnung nach Anspruch 1,
**dadurch gekennzeichnet,**
daß der Frontschutzbügel (12) ein etwa waagerecht in Fahrzeugquerrichtung und über die annähernd gesamte Breite verlaufendes unteres Stangenprofil (13) sowie ein mit diesem verbundenes, etwa U-bügelförmiges und bis etwa auf Höhe einer Bugoberkante (21) verlaufendes oberes Stangenprofil (18) umfaßt.

4. Anordnung nach Anspruch 1,
**dadurch gekennzeichnet,**
daß der Kraftwagenbug (11) seitlich und nach oben von dem Frontschutzbügel (12) begrenzt ist und als Umrahmung für die Scheinwerfer (19) und den Kühlergrill (27) ausgebildet ist.

5. Anordnung nach Anspruch 1,
**dadurch gekennzeichnet,**
daß der Frontschutzbügel (12) einen annähernd rechteckigen Grundrahmen (29) aufweist, dessen Eckbereiche (30-33) an zwei oberen und zwei unteren Längsträgern (38,39;40,41) der Kraftwagenkarosserie abgestützt sind.

6. Anordnung nach Anspruch 5,
**dadurch gekennzeichnet,**
daß zumindest zwischen den unteren Eckbereichen (30-33) des Grundrahmens (29) und den unteren Längsträgern (40,41) jeweils ein Energieabsorptionselement (Crashbox 42) angeordnet ist.

7. Anordnung nach Anspruch 1,
**dadurch gekennzeichnet,**
daß der Frontschutzbügel (12) bei erhöhtem Schutzbedarf in eine nach vorn verschobene Stellung ausfahrbar ist.

8. Anordnung nach Anspruch 1,
**dadurch gekennzeichnet,**
daß der Frontschutzbügel (12) unter Ansteuerung durch eine Näherungssensorik (56) in eine nach vorn verschobene Stellung ausfahrbar ist.
